# EUROPEAN PATENT APPLICATION

(11) **EP 1 029 575 A1**
(43) Date of publication of application: **23.08.2000**
(21) Application number: 00200486.9
(22) Date of filing: 14.02.2000
(51) Int. Cl.: B01D 21/24, B01D 21/02

(54) **Filtering device for contaminated fluids**

(30) Priority: 19.02.1999 IT MI990332
(71) Applicant: Rosauto S.r.l., 36054 Montebello Vicentino, (Vicenza) (IT)
(72) Inventor: Rosa, Giuseppe, 36050 Montorso (Vicenza) (IT)
(74) Representative: Martegani, Franco

(57) **Abstract**

A filtering device for contaminated fluids comprising a container (11, 111) to hold the contaminated fluid, where said fluid can be allowed to settle until the contaminating substance is precipitated to the bottom (12, 112) . According to the invention, said container (11, 111) provides for at least one mobile discharge pipe (19, 119) for discharging the contaminated fluid separately from the contaminating substance deposited on said bottom (12, 112).

## Description

This invention refers to a filtering device for contaminated fluids, destined particularly, but not exclusively, for separating water from a contaminating substance.

The invention is in the following, for exemplifying and non-limiting purposes, described with reference to the purification of washwater from spray pistols, used for spraying water-based paints, for instance in the automotive sector for painting the chassis, and in many other fields, such as for the painting of wooden components.

The water (generally contained in a container) used for the washing of spray pistols fouled with water-base paint is heavily contaminated after the washing operation and must be purified before disposal, by separating it from the paint.

As is well known to the experts of the branch, one of the most widely used systems for purifying this paint-contaminated water is to intimately mix it with a coagulating powder in a container, then allowing the whole to settle for the necessary period of time. After settling, the paint is precipitated in little flocs to the bottom of the container, thus forming a muddy layer (sludge) with a supernatant clear water layer.

At this point, the two substances, meaning the muddy paint layer on the bottom of the container and the clear supernatant water must be separated.

The separation of the two substances is generally done by pouring the fluid into a container with a perforated bottom, fitted with a filter capable of retaining the flocked-out paint.

In order to prevent quick plugging, a large cloth filter is generally employed.

Once soiled with paint, such a filter is difficult to reuse.

It would in fact be necessary to wash it and rinse it with flowing water, which would thus become contaminated.

Such a filter must therefore be rapidly replaced at extra cost, both for the purchasing of new filters as well as for the disposal of the used and paint-contaminated filters.

The general purpose of this invention is to eliminate these drawbacks of the known art, by creating a filtering device for contaminated fluids, of low cost and capable of being easily and perfectly cleaned and thus reutilized several times, with the obvious advantages resulting thereof.

The above purpose is achieved by a device having the characteristics exposed in the attached claims and subordinate claims.

The structural and functional characteristics of the invention and its advantages with respect to the known art will be clearly understood from an examination of the following description, referred to the attached drawings, which show two examples of a practical embodiment of the invention itself, where:
- Figure 1 is a schematic, vertically sectionalized view showing a filtering device produced according to a first possible embodiment of the invention,
- Figures 2-4 illustrate the operation of the device shown in Figure 1,
- Figure 5 is a schematic, vertically sectionalized view of a second filtering device implemented according to a further possible embodiment of the invention, and
- Figures 6-8 illustrate the operation of the device shown in Figure 5.

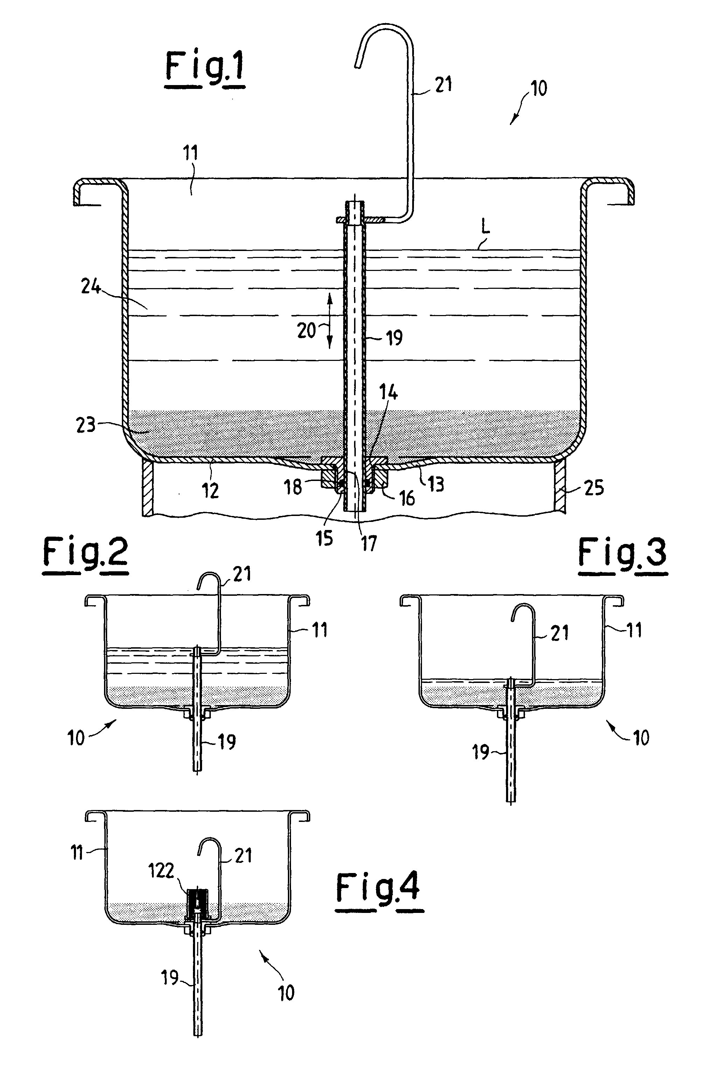

Referring above all to Figure 1 of the drawings, the subject filtering device is showed in the overall by the number 10, and structurally formed by a container 11 of any shape.

The bottom 12 of the container 11 is centrally dipped, as in 13, and presents a hole 14.

A threaded fitting 15 is mounted in said hole 14 and attached thereto by a nut 16.

A fitting 15 is axially perforated, as in 17, and a vertical tube 19, sealed by an elastic "O-ring" gasket 18, is inserted into said hole.

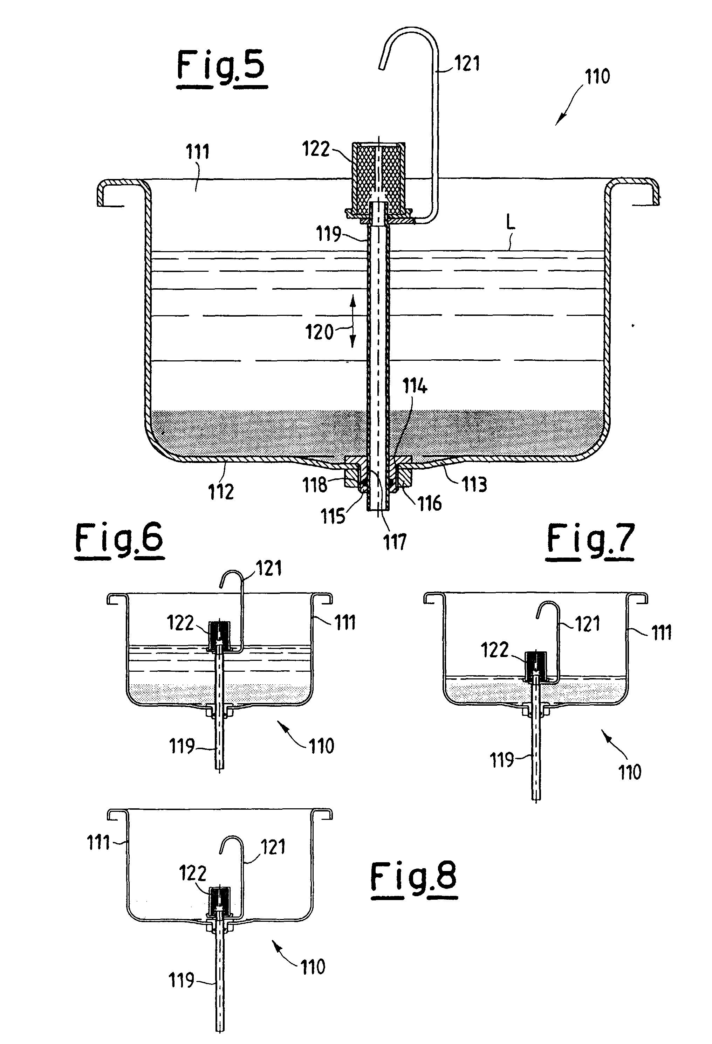

The tube 19 can be vertically shifted in the sense of the arrow 20, and its upper end terminates in a maneuvering element (handle) 21, shaped like a hook. According to the further embodiment of the invention shown in the Figures 5-8, the top of the tube 19 may also be fitted, in a removable manner, with a small filter 122, which is easily washable even by a simple compressed air jet.

In the Figures 5-8 the components identical to those of the Figures 1-4 are indicated by the same reference numbers, increased by 100.

The operation of the filtering device according to the invention clearly emerges from the above description based on the figures, and can be summarized as follows: The container 11 with the tube 19 in a raised position as shown in Figure 1 is positioned above another container (partially shown in a simplified manner by the number 25), destined to receive the purified water. This latter container 25 must of course have a capacity equal or superior to that of the container 11.

The contaminated water is poured inside the container 11 until reaching a certain level L, which must in this phase always be lower than the free upper end of the tube 19.

The contaminated water can not in this manner exit from the container 11.

The contaminated water, which may have previously already been treated with a coagulant and allowed to settle, is further settled and treated, so as to create a layer 23 of contaminating substance (sludge) on the bottom of the container 11, and a supernatant clear water layer 24.

At this point, the tube 19 can be shifted downward, in various stages (Figures 2-4) so as to immerge it into the purified water which is gradually being discharged into the underlying container.

If the contaminant layer 23 in the last phase of Figure 4 is also to be filtered, the filter 122 can be mounted at the top end of the tube 19.

Said filter 122 may however, as shown in the Figures 5-8 be utilized from the very beginning. This latter way of operating is preferable, while not essential.

Whenever the filter 122 is fouled, it may be lifted above the water level, so as to interrupt the discharge, and the filter 122 itself may be removed and cleaned, for instance by compressed air. After the filtering operation, the sludge at the bottom of the container 11 is eliminated in an appropriate disposal tank, while both the tube 19, the filter 122 and the container 11 must be well cleaned (preferably by a rag and compressed air) prior to its further re-utilisation for filtering.

The device of the invention presents the advantage that it allows the use of a very small and low cost commercial filter, which may be reutilized several times.

Moreover, the filtering operation is quick.

This achieves the purpose mentioned in the introduction of the description.

The scope of protection of the invention is defined by the following claims.

## Claims

1. A filtering device for contaminated fluids of a type comprising a container (11, 111) to hold the contaminated fluid, where said fluid may be allowed to settle until the contaminating substance is precipitated to the bottom (12, 112), characterized in that said container (11, 111) is equipped with at least one mobile discharge tube (19, 119) to discharge the fluid separately from the contaminating substance deposited on said bottom (12, 112).

2. A device according to claim 1, characterized in that said discharge tube (19, 119) extends through said bottom (12, 112) and can be vertically shifted between a raised position next to the upper edge of the container and a lowered position next to said bottom (12, 112).

3. A device according to claim 2, characterized in that said discharge tube (19, 119) is extended in a central position in the container.

4. A device according to claim 2, characterized in that said discharge tube (19, 119) is extended in a central position from a lowered section (13) of the bottom (12, 112) of said container (11, 111).

5. A device according to claim 1, characterized in that the top of said tube (19, 119) is fitted with a removable filter (122).

6. A device according to claim 1, characterized in that the top of said tube (19) is fitted with a maneuvering device (21, 121).
